# EUROPÄISCHE PATENTANMELDUNG

(11) **EP 1 190 832 A2**
(43) Veröffentlichungstag der Anmeldung: **27.03.2002**
(21) Anmeldenummer: 01122071.2
(22) Anmeldetag: 14.09.2001
(51) Int. Cl.: B29C 45/17, B29C 45/26

(54) **Verfahren und Vorrichtung zum Abdichten eines Kunststoffspritzgiesswerkzeuges**

(30) Priorität: 23.09.2000 DE 10047227
(71) Anmelder: Battenfeld GmbH, D-58540 Meinerzhagen (DE)
(72) Erfinder: Eckardt, Helmut, 58540 Meinerzhagen (DE); Ehritt, Jürgen, 57271 Hilchenbach (DE); Wülfrath, Marc, 58566 Kierspe-Vollme (DE); Bloemeke, Christof, 59590 Geseke (DE); Jaroschek, Christoph, Prof. Dr., 33619 Bielefeld (DE); Hunold, Mathias, 59590 Geseke (DE)

(57) **Zusammenfassung**

Die Erfindung betrifft ein Verfahren zum Spritzgießen eines Kunststoff-Formteils in einem Spritzgießwerkzeug, das die Schritte aufweist: a) Einspritzen einer vorgegebenen Menge Kunststoffschmelze in das Spritzgießwerkzeug; b) Einbringen von Druckfluid, insbesondere Druckgas, zwischen einen Teil der Wandung des Spritzgießwerkzeugs und der eingespritzten Kunststoffschmelze; c) Abkühlenlassen der Kunststoffschmelze, bis das Kunststoff-Formteil selbsttragend ist; d) Entformen des Kunststoff-Formteils. Erfindungsgemäß ist vorgesehen, daß während oder nach dem Schritt a) und während oder vor dem Schritt b) die Kavität (3) des Spritzgießwerkzeugs (2), vorzugsweise durch aktivieren von mindestens einer Dichtung (4), gegenüber der Umgebung abgedichtet wird.

Des weiteren betrifft die Erfindung eine Spritzgießform (2), insbesondere zur Durchführung des Verfahrens nach mindestens einem der Ansprüche 1 bis 6, zum Spritzgießen eines Kunststoff-Formteils, die aufweist: ein aus mindestens zwei Hälften bestehendes Formwerkzeug (2) mit einer Kavität (3); mindestens ein Fluideinspritzelement (7), das Druckfluid, insbesondere Druckgas, von einer Wandung der Kavität (3) aus in die Kavität einleitet, so daß sich ein Fluidpolster zwischen Wandung und der ins Formwerkzeug eingebrachten Schmelze bildet. Erfindungsgemäß ist hier vorgesehen, daß mindestens eine der zwei Hälften des Formwerkzeuges mit einer Dichtung (4) ausgeführt ist, um die Kavität (3) des Spritzgießwerkzeugs (2) gegenüber der Umgebung abzudichten.

## Beschreibung

Die Erfindung betrifft ein Verfahren zum Spritzgießen eines Kunststoff-Formteils in einem Spritzgießwerkzeug, das die Schritte aufweist:
a) Einspritzen einer vorgegebenen Menge Kunststoffschmelze in das Spritzgießwerkzeug;
b) Einbringen von Druckfluid, insbesondere Druckgas, zwischen einen Teil der Wandung des Spritzgießwerkzeugs und der eingespritzten Kunststoffschmelze;
c) Abkühlenlassen der Kunststoffschmelze, bis das Kunststoff-Formteil selbsttragend ist;
d) Entformen des Kunststoff-Formteils; sowie
eine Spritzgießform zum Spritzgießen eines Kunststoff-Formteils, die aufweist: ein aus mindestens zwei Hälften bestehendes Formwerkzeug mit einer Kavität, mindestens ein Fluideinspritzelement, das Druckfluid, insbesondere Druckgas, von einer Wandung der Kavität aus in die Kavität einleitet, so daß sich ein Fluidpolster zwischen Wandung und der ins Formwerkzeug eingebrachten Schmelze bildet,

Ein Verfahren ähnlich zur gattungsgemäßen Art ist aus der **WO 90/06220 A1** bekannt. Dort wird zunächst eine für die Ausbildung des Formteils ausreichende Menge Kunststoffschmelze in die Kavität eines Spritzgießwerkzeugs eingebracht. Da der Kunststoff während des Abkühlprozesses einer Schrumpfung unterliegt, kann es ohne besondere Vorkehrungen zu Einfallstellen kommen. Diese werden gemäß dieser Veröffentlichung dadurch vermieden, daß Druckgas als Polster zwischen Kavitätsoberfläche und Kunststoffschmelze gebracht wird. Natürlich muß sichergestellt werden, daß dieses Gaspolster gezielt aufgebaut und - nach der Erhärtung der Schmelze - wieder abgebaut werden kann. Zu diesem Zweck sind zwei Lösungsmöglichkeiten beschrieben:

Zum einen sind Ventile vorgesehen, die über einen entsprechenden Ventilsitz eine Gasabdichtung ermöglichen. Durch die Betätigung (axiale Verstellung) des Ventilschaftes kann das Ventil wahlweise auf "offen" oder "zu" gestellt werden, womit in Kombination mit einer entsprechenden Gasregelung das gewünschte Gaspolster auf- und abgebaut werden kann.

Alternativ ist vorgesehen, daß poröses Sintermetall zum Einsatz kommt. An der Übergangsstelle im Werkzeug, an der das Gaspolster erzeugt werden soll, ist ein poröses Metallelement vorgesehen, durch das Druckgas hindurchströmen kann; dies gilt jedoch nicht für die Kunststoffschmelze, wodurch eine gezielte Begasung ohne Rückströmen von Schmelze erreicht werden kann.

Diese Lösungen weisen jedoch verschiedene Nachteile auf: Die vorgesehenen Ventile müssen eine mechanische Steuerung haben, um gezielt geöffnet und geschlossen werden zu können. Dies setzt einen gewissen Mindestraum für die entsprechende Anordnung voraus. Die Folge ist eine aufwendige und teure Konstruktion der Ventilelemente. Bei dem alternativen Einsatz von porösen Sintermetallen ergibt sich das Problem, daß es nicht ausgeschlossen werden kann, daß sich Teile der Sinteroberfläche allmählich mit winzigen Schmelzepartikeln zusetzen. Dabei handelt es sich um einen schleichenden Vorgang, so daß das Arbeitsergebnis erst allmählich schlechter wird. Die Reproduzierbarkeit des Produktionsverfahrens ist daher nicht gewährleistet.

Ein weiteres Verfahren ähnlich zur gattungsgemäßen Art ist aus der **WO 93/01039 A1** bekannt. Hier geht es speziell um das Problem, wie erreicht werden kann, daß sich das zwischen Kavitätsoberfläche und Kunststoffschmelze eingebrachte Gaspolster nicht unerwünscht ausbreitet und an Stellen zur Wirkung kommt, wo dies nicht erwünscht ist.

Lösungsgemäß wird dort vorgeschlagen, eine Aufrauhung der Kavitätsoberfläche an den Stellen vorzusehen, wo sich das Gaspolster aufbauen soll. Die Oberflächen-Stellen, die an das Gaspolster angrenzen, jedoch selber nicht mehr durch dieses beaufschlagt werden sollen, sind glatt ausgeführt. Es wird also durch Aufrauhung der Oberfläche der Bereich definiert, in dem sich das Gaspolster ausbilden und wirken soll.

Bei diesem Verfahren ist eine entsprechende werkzeugtechnische Bearbeitung notwendig: Die Stellen, an denen das Polster wirken soll, müssen behandelt (aufgerauht) werden, was für das Werkzeug einen irreversiblen Vorgang darstellt, der darüber hinaus mit hohen Kosten verbunden ist. Weiterhin kann das Druckgas bis an die Trennflächen des Werkzeuges wirken. In einigen Fällen ist ein sehr hoher Druck erforderlich, der entgegen der Zuhaltekraft des Werkzeuges wirkt und die beiden Werkzeughälften auseinander drückt, so daß Druckgas entweichen kann. Der Druck wird nicht mehr auf die Schmelze aufgebracht und das gewünschte Ergebnis wird nicht erreicht.

Die **DE 197 46 802 A1** gehört ebenfalls zur gattungsgemäßen Art, gibt allerdings auch keinen Hinweis, die genannten Nachteile zu beheben.

Ausgehend von diesem bekannten Stand der Technik stellt sich die Erfindung die **Aufgabe**, ein Verfahren und eine Vorrichtung anzubieten, das bzw. die es ermöglicht, das gewünschte Druckprofil zwischen die Schmelze und einer Kavitätswandung aufzubringen.

Die **Lösung** der Aufgabe durch die Erfindung ist dadurch gekennzeichnet, daß während oder nach dem Schritt a) und während oder vor dem Schritt b) die Kavität (3) des Spritzgießwerkzeugs (2), vorzugsweise durch aktivieren von mindestens einer Dichtung (4), gegenüber der Umgebung abgedichtet wird.

Durch dieses Abdichten des Werkzeuges wird erreicht, daß der aufgebrachte Druck in der Kavität gehalten wird und somit das Fluid in gewünschter Höhe auf die Schmelze wirkt.

Fortbildungsgemäß wird die Aktivierung der mindestens einen Dichtung gesteuert und/oder geregelt. Besonders vorteilhaft ist es, wenn die Steuer- und/oder Regelung der mindestens einen Dichtung zeit-, druck- oder wegabhängig erfolgt, wobei die Kunststoffschmelze oder das Druckfluid als Steuer- oder Regelelement eingesetzt wird. Es wird somit ermöglicht, die Dichtung, beispielsweise nach der Eingabe einer vorbestimmten Menge an Kunststoffschmelze, zu aktivieren und somit über diese Leckage an den Berührungsflächen der beiden Formhälften erst ein Entweichen der in der Kavität befindlichen Luft zu gewähren und vor dem Aufbringen des Fluidpolsters diese Leckage zu schließen. In analoger Weise kann diese Aktivierung der Dichtung beispielsweise zeitlich vor der Eingabe des Fluids erfolgen.

Um diese Abdichtung auch bei aufwendigeren Formteilen, die beispielsweise Hinterschnitte aufweisen und somit in der Spritzgießform Schieber erforderlich machen, einsetzen zu können, wird erfindungsgemäß vorgeschlagen, daß während oder nach dem Schritt a) und während oder vor dem Schritt b) durch Aktivieren einer Dichtung an diesen beweglichen Teilen die Kavität des Spritzgießwerkzeugs gegenüber der Umgebung ebenfalls abgedichtet wird.

Eine weitere Möglichkeit ist der Einsatz von beispielsweise Lamellendichtungen aus Gummi, diese Dichtungen erreichen ihre Dichtwirkung bereits beim Schließen des Werkzeuges. Um jedoch auch hier die erforderliche Entlüftung der Kavität zu gewährleisten, ist erfindungsgemäß vorgesehen eine Entlastungsbohrung vorzusehen, über die während des Schrittes a) Luft entweichen kann. Vor oder während des Schrittes b) wird diese Bohrung geschlossen und der gewünschte Druck kann aufgebaut werden. Weiterbildungsgemäß ist vorgesehen über diese Entlastungsbohrung einen Gegendruck aufzubauen, dies wird erreicht in dem über diese Bohrung ein Druckfluid eingegeben wird, dessen Druck niedriger als der Druck des Druckfluids ist, das über den Einspritzbaustein in die Kavität eingegeben wird.

Die erfindungsgemäße Spritzgießform zum Spritzgießen eines Kunststoff-Formteils zeichnet sich dadurch aus, daß mindestens eine der zwei Hälften des Formwerkzeuges mit einer Dichtung ausgeführt ist, um die Kavität des Spritzgießwerkzeugs gegenüber der Umgebung abzudichten. Vorteilhafterweise wird die Dichtung über Aktivatoren aktiviert. Als Aktivator wird die Kunststoffschmelze oder das Fluid vorgeschlagen. Über geeignete Mittel, beispielsweise einem Drucksensor, wird der Forminnendruck festgestellt, der wiederum eine Kenngröße für die eingespritzte Menge an Kunststoffschmelze ist. Ab einer vorgegebenen Mindestmenge wird die Dichtung aktiviert. Hier kann zum Beispiel ein eingesetzter Schlauchkörper mit einem Fluid gefüllt werden, wodurch sich das Volumen der Dichtung verändert und den minimalen Spalt zwischen den Formhälften schließt. Es ist aber auch denkbar, eine Dichtung aus einem verformbaren Material wie Gummi, auszuführen. Nach der Aktivierung durch das Fluid oder die Kunststoffschmelze wird der Anpreßdruck, der die beiden Formhälften aneinander drückt, also der Schließdruck, erhöht und somit die Dichtung aktiviert und die Abdichtung der Kavität erreicht.

Weiterbildungsgemäß ist vorgesehen, auch die beweglichen Teile wie Schieber oder Auswerfer, die eine Öffnung in die Kavität aufweisen, also zumindest eine gasoffene Verbindung zur Umgebung ermöglichen, mit einer Dichtung zu versehen.

Mit dem vorgeschlagenen Verfahren und der vorgeschlagenen Vorrichtung wird es möglich, den gewünschten Fluiddruck zwischen die Wandung der Kavität und der Schmelze aufzubringen, ohne daß sich der Druck über die Berührungsflächen der beiden Formhälften abbauen kann.

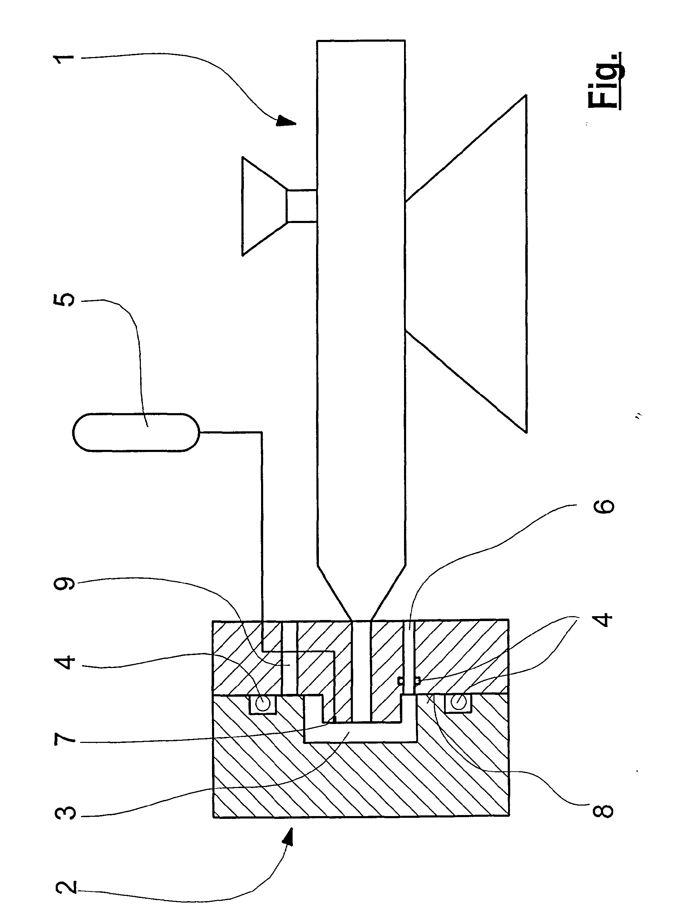

In der Zeichnung ist schematisch ein Ausführungsbeispiel der Erfindung dargestellt.

Die Figur zeigt eine Plastifizier- und Einspritzeinheit 1 und eine Spritzgießform 2 mit der Kavität 3, die mittels Dichtungen 4 gegen die Umgebung abgedichtet ist. Die Spritzeinheit 1 ist mit der Kavität 3 verbunden, um thermoplastische Kunststoffschmelze in die Kavität einzugeben. In der Kavitätswandung ist ein Einspritzbaustein 7 angeordnet der über Leitungen mit einer Druckfluideinheit 5 verbunden ist und über den zwischen die Kavitätswandung und die Kunststoffschmelze vorzugsweise Stickstoff eingegeben wird. Nach oder kurz vor Beendigung der Eingabe der Schmelze in die Kavität 3 wird die Dichtung 4 aktiviert und sperrt somit die Kavität entlang der Dichtfläche 8 gegen die Umgebung ab. Ein schematisch dargestellter Auswerfer 6 ist ebenfalls mit einer Dichtung 4 versehen. Es wird somit ermöglicht, auch diese Stellen, über die Gas entweichen könnte, gegen die Umgebung abzudichten. Beim Einsatz einer nicht aktivierbaren Dichtung ist vorgesehen die Entlüftung der Kavität über die Entlastungsbohrung 9 sicher zu stellen.

### Bezugszeichenliste:

- 1: Plastifizier- und Einspritzeinheit
- 2: Spritzgießform
- 3: Kavität der Spritzgießform 2
- 4: Dichtung
- 5: Druckfluideinheit
- 6: Auswerfer
- 7: Einspritzbaustein
- 8: Dichtfläche
- 9: Entlastungsbohrung

## Patentansprüche

1. Verfahren zum Spritzgießen eines Kunststoff-Formteils in einem Spritzgießwerkzeug, das die Schritte aufweist:
a) Einspritzen einer vorgegebenen Menge Kunststoffschmelze in das Spritzgießwerkzeug;
b) Einbringen von Druckfluid, insbesondere Druckgas, zwischen einen Teil der Wandung des Spritzgießwerkzeugs und der eingespritzten Kunststoffschmelze;
c) Abkühlenlassen der Kunststoffschmelze, bis das Kunststoff-Formteil selbsttragend ist;
d) Entformen des Kunststoff-Formteils;
**dadurch gekennzeichnet, daß**
während oder nach dem Schritt a) und während oder vor dem Schritt b) die Kavität (3) des Spritzgießwerkzeugs (2), vorzugsweise durch aktivieren von mindestens einer Dichtung (4), gegenüber der Umgebung abgedichtet wird.

2. Verfahren nach Anspruch 1, **dadurch gekennzeichnet, daß** die Aktivierung der mindestens einen Dichtung (4) gesteuert und/oder geregelt wird.

3. Verfahren nach Anspruch 2, **dadurch gekennzeichnet, daß** die Steuer- und/oder Regelung der mindestens einen Dichtung (3) zeit-, druck- oder wegabhängig erfolgt, wobei die Kunststoffschmelze oder das Druckfluid als Steuer- oder Regelelement eingesetzt wird.

4. Verfahren nach mindestens einem der Ansprüche 1 bis 3, **dadurch gekennzeichnet, daß** während oder nach dem Schritt a) und während oder vor dem Schritt b) durch Aktivieren einer Dichtung (4) an weiteren beweglichen Teilen (6) die Kavität (3) des Spritzgießwerkzeugs (2) gegenüber der Umgebung abgedichtet wird.

5. Verfahren nach einem der Ansprüche 1 bis 4, **dadurch gekennzeichnet, daß** während oder vor dem Schritt b) die eine Entlastungsbohrung (9) geschlossen wird.

6. Verfahren nach Anspruch 5, **dadurch gekennzeichnet, daß** nach dem Schritt a) über die Entlastungsbohrung (9) ein Druckfluid eingebracht wird, wobei der Druck niedriger als der Druck des Druckfliud ist welches über den Einspritzbaustein (7) eingebracht wird.

7. Spritzgießform (2), insbesondere zur Durchführung des Verfahrens nach mindestens einem der Ansprüche 1 bis 5, zum Spritzgießen eines Kunststoff-Formteils, die aufweist:
- ein aus mindestens zwei Hälften bestehendes Formwerkzeug (2) mit einer Kavität (3);
- mindestens ein Fluideinspritzelement (7), das Druckfluid, insbesondere Druckgas, von einer Wandung der Kavität (3) aus in die Kavität einleitet, so daß sich ein Fluidpolster zwischen Wandung und der ins Formwerkzeug eingebrachten Schmelze bildet,
**dadurch gekennzeichnet, daß**
mindestens eine der zwei Hälften des Formwerkzeuges mit einer Dichtung (4) ausgeführt ist, um die Kavität (3) des Spritzgießwerkzeugs (2) gegenüber der Umgebung abzudichten.

8. Spritzgießform (2) nach Anspruch 7, **dadurch gekennzeichnet, daß** zur Entlüftung der Kavität (3) zusätzlich eine Entlastungsbohrung (9) angeordnet ist.

9. Spritzgießform (2) nach Anspruch 7, **dadurch gekennzeichnet, daß** die Dichtung (4) über Aktivatoren aktivierbar ist.

10. Spritzgießform (2) nach mindestens einem der Ansprüche 7 bis 9, **dadurch gekennzeichnet, daß** als Aktivator die Kunststoffschmelze oder das Fluid einsetzbar ist.

11. Spritzgießform (2) nach einem der Ansprüche 7 bis 10, **dadurch gekennzeichnet, daß** die Dichtung (4) als Schlauchkörper ausgeführt ist, der durch ein Fluid im Volumen veränderbar ist.

12. Spritzgießform (2) nach einem der Ansprüche 7 bis 10, **dadurch gekennzeichnet, daß** die Dichtung (4) aus einem verformbaren Material, insbesondere Gummi, ausgeführt ist.

13. Spritzgießform (2) nach mindestens einem der Ansprüche 7 bis 12, **dadurch gekennzeichnet, daß** bewegliche Teile (6), die eine Öffnung in die Kavität (3) aufweisen, mit einer Dichtung (4) versehen sind.
